# EUROPÄISCHE PATENTSCHRIFT

(11) **EP 2 329 329 B1**
(45) Veröffentlichungstag und Bekanntmachung des Hinweises auf die Patenterteilung: **13.04.2016**
(21) Anmeldenummer: 09736380.8
(22) Anmeldetag: 02.10.2009
(51) Int. Cl.: G05B 19/409, B25J 19/00

(54) **ARBEITS- UND SERVICESTATION SOWIE EIN SYSTEM ZUM BETREIBEN EINER HANDHABUNGSVORRICHTUNG**
WORK AND SERVICE STATION AND SYSTEM FOR OPERATING A HANDLING DEVICE
POSTE DE TRAVAIL ET DE SERVICE ET SYSTÈME VISANT À FAIRE FONCTIONNER UN DISPOSITIF DE MANIPULATION

(30) Priorität: 03.10.2008 DE 102008049894; 06.10.2008 DE 102008050107; 10.10.2008 DE 102008050958
(43) Veröffentlichungstag der Anmeldung: 08.06.2011
(73) Patentinhaber: ABB AG, 1109 Wien (AT)
(72) Erfinder: ROTH, Michael, 1230 Wien (AT); KRAPPINGER, Rainer, 2724 Stollhof (AT); GFATTER, Stefan, 1010 Wien (AT)
(74) Vertreter: Kock, Ina
(86) Internationale Anmeldenummer: PCT/EP2009/007084
(87) Internationale Veröffentlichungsnummer: WO 2010/037557

(56) Entgegenhaltungen:
- EP-A1- 1 914 044
- WO-A2-2007/137234
- DE-A1-102005 010 850
- US-A- 5 959 423
- US-A1- 2005 171 627

## Beschreibung

Die Erfindung betrifft eine Arbeits- und Servicestation sowie ein System zum Betreiben eines mehrachsigen Industrieroboters, welches wenigstens eine Arbeits- und Servicestation sowie wenigstens eine Mensch-Maschine-Schnittstelle (MMI) beziehungsweise Human-Machine-Interface (HMI) umfasst und einen effizienten Betrieb des jeweiligen mehrachsigen Industrieroboters, ermöglicht.

In der industriellen Fertigung übernehmen Roboter in zunehmendem Maße wiederkehrende Aufgaben und Funktionen beziehungsweise Aufgaben und Funktionen mit hoher Wiederholrate. Ihr Einsatzbereich erstreckt sich dabei über das Assembling beziehungsweise den Zusammenbau sowie die Handhabung von Komponenten, insbesondere von Montagearbeiten, bis hin zur Bearbeitung oder Verarbeitung von Werkstücken, wie beispielsweise dem Lackieren, Schleifen, Laserschneiden, Polieren, Bohren, Fräsen und Schweißen. Um die verschiedenen Aufgaben bewältigen zu können wurden im Laufe der Zeit eine Vielzahl an Werkzeugen sowie demgemäße Werkzeugwechsel-, Service- und Arbeitsstationen beziehungsweise Wartungssysteme entwickelt welche spezifisch nach der jeweilig zu erfüllenden Funktionalität ausgebildet und im jeweiligen Nah- und Arbeitsbereich des Roboters angeordnet sind. Da zur Ausführung eines oder mehrerer Arbeitsprozesse oftmals auch eine Vielzahl unterschiedlicher Funktionalitäten benötigt werden, sind demgemäß oftmals auch eine Vielzahl physisch voneinander getrennter, demgemäßer Stationen vorgesehen, welche funktionsspezifisch in den jeweiligen Prozess und Arbeitsablauf räumlich und zeitlich zu integrieren sind.

Dabei finden beispielsweise Stationen Einsatz, welche unter anderem auch Mittel umfassen, die die Reinigung oder das Vermessen des jeweilig vom Roboter gehandhabten Werkzeuges und/oder Werkobjektes erlauben.

Der jeweilige Status der diesbezüglichen Wartungs- und/oder Reinigungsprozesse kann dem Anwender beispielsweise über eine graphische Schnittstelle mitgeteilt werden, wobei die einzelnen Stationen programmtechnisch in den jeweiligen Prozess integriert und in regelmäßigem Interwall durchlaufen werden können.

Darüber hinaus finden sich derartige Stationen häufig auch bei Bearbeitungszentren oder bei Roboteranlagen, wobei Mittel vorsehbar sind, welche beispielsweise eine Werkzeugbruchüberwachung oder Verschleißüberprüfung bewirken und/oder ermöglichen.

Separierte Reinigungsstationen finden dabei eher weniger Verwendung, da eine permanente Kühl-Schmierung und ein Reinigungsprozess bereits während des Bearbeitungsprozesses bewirkt sind.

In der Robotertechnik sind demgemäße Wartungs- und/oder Vermessungsstationen beziehungsweise Kombinationen daraus insbesondere auch bei Schweißanwendungen sehr häufig verbreitet, wobei die Reinigungsstation dafür eingesetzt ist den Brenner von Ablagerungen beziehungsweise Schweißspritzern und/oder - perlen zu befreien und die Vermessungsstation eingesetzt ist den jeweiligen Schweißdraht zu vermessen.

So ist beispielsweise das sog. "Bulls-Eye" als Werkzeug Services Station bekannt, welche bei Schweißanwendungen zum Einsatz kommt. Diese Einheit inkludiert beziehungsweise umfasst eine Vermessungsstation für den Schweißdraht und eine Brennerreinigungsstation, wobei ein höhenverstellbarer Ständer vorgesehen ist, welcher auf die verschiedenen Anforderungen adaptiert werden kann.

Durch Den Einsatz derartiger Stationen lässt sich die Qualität des Prozesses beziehungsweise der Produkte sowie die Lebensdauer der Komponenten wesentlich steigern und erhöhen.

Das Dokument DE 10 2005 010850 A1 betrifft einen Auftragsroboter für Flüssigkeiten auf Oberflächen, mit einer textilen ebenen Struktur zwischen der Sprühöffnung und der Arbeitsoberfläche, um die Flüssigkeit beim Aufbringen auf die Oberfläche zu verteilen. D3 offenbart auch eine Servicestation des Flüssigkeitsauftrags-Roboters, die einen Tisch mit 4 Beinen im Wirkungsbereich des Roboters und verschiedene Geräte und Bauteile mit unterschiedlichen Aufgaben umfasst: Überprüfen des Arbeitsergebnisses, Einstellen der Spritzeinrichtung, zur Entsorgung des Filzes, des Weiteren ein Messgerät zur Feuchtebestimmung des Filzes, eine Entnahmevorrichtung mit Abfallbehälter für verbrauchte Filze, ein Stativ mit Trichter, eine Präzisionswaage sowie eine Messspitze mit Schutzkappe

Aufgabe der Erfindung ist es demgemäß eine verbesserte Möglichkeit anzugeben, welche mit vergleichsweise geringem Aufwand eine in den jeweiligen Arbeitsprozess integrierbare/einbeziehbare effiziente Möglichkeit für Wartung und Service sowohl einzelner Werkzeuge als auch des mehrachsigen Industrieroboters anzugeben.

Diese Aufgabe wird durch eine Arbeits- und Servicestation für einen mehrachsigen Industrieroboter mit den Merkmalen des Anspruchs 1 gelöst. Vorteilhafte Ausgestaltungen und Weiterbildungen der Station sowie ein System zum Betreiben eines mehrachsigen Industrieroboters sind in weiteren Ansprüchen und der nachfolgenden Beschreibung angegeben.

Die erfindungsgemäße Arbeits- und Servicestation für einen mehrachsigen Industrieroboter umfasst wenigstens eine Mensch-Maschinen-Schnittstelle, im Folgenden auch als MMI oder HMI bezeichnet, sowie wenigstens ein Arbeits- und/oder Servicemodul, wobei ein Modulträger mit wenigstens einer Schnittstelle zur Ankopplung und/oder Anordnung des wenigstens einen Arbeits- und/oder Servicemoduls vorgesehen ist und wenigstens ein Arbeits- und/oder Servicemodul, insbesondere über wenigstens eine Kommunikationsverbindung, mit wenigstens einer Mensch-Maschinen-Schnittstelle zusammenwirkt.

Das zur Lösung der gestellten Aufgabe vorgesehene System zur Bedienung eines mehrachsigen Industrieroboters umfasst erfindungsgemäß eine Steuer-/Regeleinrichtung sowie wenigstens eine vorgenannte Arbeits- und Servicestation, beispielsweise mit einer Mensch-Maschinen-Schnittstelle in Form eines Bedienpanels und/oder Bedienelementes und/oder einer Bedienkonsole, wobei die Steuer-/Regeleinrichtung mit der jeweiligen Arbeits- und Servicestation, und insbesondere dem HMI zusammenwirkt.

Vorteilhaft ist wenigstens ein Arbeits- oder Servicemodul zur Aufnahme und/oder zum Wechseln wenigstens eines Werkzeuges, insbesondere eines Werkzeuges mit Antriebsspindel, vorbereitet und/oder eingerichtet.

In einer vorteilhaften Weiterbildung ist der jeweilige Industrieroboter, im Bereich der mechanischen Bearbeitung von Werkobjekten und/oder Oberflächen, insbesondere zum Schleifen, Polieren oder Entgraten, eingesetzt und/oder mit einer Antriebsspindel ausgestattet.

In einer vorteilhaften Ausgestaltung ist die Mensch-Maschine-Schnittstelle (MMI) als graphische Schnittstelle mit einer Eingabe- und Anzeigevorrichtung, gegebenenfalls auch kombiniert, beispielsweise als Touchscreen, ausgebildet, über welche der jeweilige Anwender über den Status der einzelnen Module informierbar und das manuelle Auslösen der Funktionen der Module initiierbar ist.

In einer weiteren Ausprägung ist wenigstens eine standardisierte Schnittstelle vorgesehen, insbesondere eine USB-, SCSI-, Bluetooth, Ethernet, Funk, WLAN, Profinet, Profibus, CAN oder CANOpen oder gängige andersartige Schnittstelle zur Ankopplung und/oder zur Datenkommunikation zwischen jeweiligem Modul und MMI und/oder MMI und Steuer-/Regeleinrichtung des mehrachsigen Industrieroboters vorgesehen.

Weiterhin ist wenigstens eine elektro-magnetische und/oder mechanische und/oder elektro-mechanische Schnittstelle vorsehbar, über welche eine Auswahl an verfügbaren Service- und/oder Bearbeitungsmodule beziehungsweise Arbeitsmodule individuell zusammenstellbar beziehungsweise kombinierbar und/oder an dem Modulträger anordenbar sind.

Weiterhin ist zudem eine Schnittstelle zur Versorgung der einzelnen Module mit elektrischer Energie vorsehbar.

Mittels Modulträger, insbesondere einer Trägerplatte, kann die gesamte Station an einem standardisierten Steher oder Ständer montiert beziehungsweise angeordnet werden.

Vorteilhaft ist die Montage ist dabei kundenspezifisch ausführbar, derart, dass beispielsweise eine Wandmontage und/oder ein eigens konstruierter Steher vorsehbar ist.

In vorteilhafter Ausgestaltung ist der Modulträger dabei drehbar und/oder höhenverstellbar, insbesondere beweglich, am jeweiligen Steher beziehungsweise Ständer angeordnet.

Auch eine Anordnung der Station an einer weiteren Handhabungsvorrichtung ist damit grundsätzlich vorsehbar.

In einer weiteren vorteilhaften Ausgestaltung ist die Station derart ausgestaltet, dass die wenigstens eine MMI unmittelbar an der Station beziehungsweise dem Modulträger anordenbar ist, auch wenn kein standardisierter Steher oder Ständer vorgesehen ist.

In einer weiteren Ausführungsvariante umfasst die Mensch-Maschinen-Schnittstelle in vorteilhafter Ausführung wenigstens eine Anzeigeeinrichtung und/oder eine Eingabeeinrichtung, gegebenenfalls auch kombiniert ausgeführt, beispielsweise als Touchscreen.

In einer weiteren Ausführung weist die Schnittstelle Mittel auf, welche die einzelnen, eingesetzten Stationen angeben und/oder darstellen und/oder eine Interaktion mit diesen und/oder einen Zugriff auf diese ermöglichen.

In einer weiteren Ausgestaltung umfasst das MMI Mittel, welche den jeweiligen Anwender über den Status der einzelnen Module informieren und/oder es dem Anwender ermöglichen aktiv, das heißt auf Anweisung und/oder Anfrage, die Funktion beziehungsweise den Prozess des jeweiligen Moduls abrufen beziehungsweise auslösen und/oder initiieren.

Bei den über das MMI abrufbaren Statusinformationen kann es sich dabei um allgemeine Informationen, beispielsweise auch über Sensoren erfasster Umgebungsparameter und/oder Randbedingungen, und/oder um spezifische Informationen handeln, welche sich beispielsweise auf das jeweilige Werkzeug beziehen.

Weiterhin ist wenigstens eine Schnittstelle vorsehbar, mit welcher die Informationen vom MMI abrufbar und/oder an die jeweilige Steuer-/Regeleinrichtung der Handhabungsvorrichtung übermittelbar und/oder übertragbar sind.

Vorteilhaft ist ein Kalibriermodul beziehungsweise ein Kalibrierungsmodul vorsehbar mit welchem der TCP (Tool Center Point) des jeweiligen Werkzeuges und/oder Werkobjektes zu messen und/oder zu vermessen ist und/oder die Werte dem Werkzeug zuweisbar sind.

Derartige Kalibrierungen werden durchgeführt, um Toleranzen auszugleichen beziehungsweise Folgefehler zu vermeiden.

Die Vermessung kann in die jeweilige Programmroutine integriert oder manuell durch den Anwender am MMI ausgelöst werden.

Das Kalibrierungsmodul kann dabei unterschiedlich ausgeführt sein, beispielsweise mittels Force-Control (FC) - Calibration beziehungsweise kraftgeregelt oder - gesteuert und/oder über eine entsprechende Sensorik.

Diese Technologie (Force Control) ermöglicht, dass der jeweilige Roboter auf externe Kräfte reagiert, das heißt die Mechanik des Roboters verändert anhand der Einstellungen des Force Controllers - im Wesentlichen eine Messanordnung mit Kraftsensor und Regeleinrichtung, welche mit der Steuereinrichtung der Handhabungsvorrichtung beziehungsweise des jeweiligen Roboters zusammenwirkt - die Position des Endeffektors (Werkzeug oder Führungselement) abhängig von den externen Kräften. Diese Eigenschaft ist für die Kalibrierung und/oder Ausrichtung der Handhabungsvorrichtung heranziehbar bzw. verwendbar.

Dabei ist vorteilhaft vorsehbar, dass das Kalibrierungsmodul ein oder mehrere zweite Führungselemente umfasst, wobei das jeweilige zweite Führungselement zur Kennzeichnung eines Koordinatenpunktes und/oder einer Orientierung, insbesondere des TCP, vorsehbar ist.

Beim Kalibrieren und/oder Ausrichten der Handhabungsvorrichtung ist wenigstens ein erstes Führungselement zur Anordnung am distalen Ende der Handhabungsvorrichtung vorsehbar, welches mit dem jeweiligen zweiten Führungselement des Kalibrierungsmodul zusammenwirkt, derart, dass das jeweilige erste sowie das jeweilige zweite Führungselement aufeinander angepasst und/oder zueinander kompatibel und/oder komplementär sind, so dass das eine Element in das dazu kompatible andere Element einführbar ist und/oder ein Eingriff des einen Elemente in das jeweils andere Element bewirkbar ist und/oder jeweils zwei komplementäre Elemente passgenau ineinander anordenbar sind.

Dabei wird lediglich auf die relative Bewegung der beiden komplementären Führungselemente abgestellt, wobei für die nachfolgenden Betrachtungen unerheblich bleibt ob das eine Element bewegt und in das andere Element eingeführt oder das eine Element bewegt und über das andere Element geführt beziehungsweise gestülpt wird. Es kommt stets nur auf die Relativbewegung der beiden Führungselemente zueinander an, so dass aus dieser Anschauung heraus stets davon gesprochen und ausgegangen werden kann, dass ein Element in das andere eingeführt wird.

In einer vorteilhaften Weiterbildung auch des Kalibrierungsmoduls weist wenigstens eines der Führungselemente einen sich zumindest über einen Teilbereich des Elements erstreckenden Konus auf, so dass eine leichtere Ineinanderführung des ersten und zweiten Führungselementes und eine verbesserte Passgenauigkeit beziehungsweise ein passgenauerer Sitz ermöglicht wird.

Weiterbildend ist das jeweilige zweite Führungselement des Kalibrierungsmoduls im Wesentlichen zylindrisch, insbesondere als Stift oder Stab oder Dorn oder Zapfen, ausbildbar, wobei grundsätzlich unterschiedliche geometrische Querschnittsflächen, wie beispielsweise elliptisch, kreisförmig, dreieckig oder aber vier und mehreckig möglich und realisierbar sind.

Das dazu komplementäre Führungselement ist dabei als im Wesentlichen zylindrische Buchse und/oder Becher ausbildbar, wobei grundsätzlich unterschiedliche geometrische Querschnittsflächen, wie beispielsweise elliptisch, kreisförmig, dreieckig oder aber auch vier und mehreckig möglich sind.

In einer weiteren Ausgestaltung umfasst das Kalibrierungsmodul wenigstens einen Aufnehmer zur Aufnahme oder Anordnung wenigstens eines zweiten, insbesondere als Stift oder Stab oder Dorn oder Zapfen ausgebildeten Führungselementes.

In einer weiteren Ausgestaltung umfasst der Aufnehmer zur Markierung beziehungsweise Kalibrierung des TCP (Tool Center Point) wenigstens vier zweite Führungselemente.

In Weiterbildung des Kalibrierungsmoduls ist das jeweilige zweite Führungselement bei stiftartiger Ausbildung an den Aufnehmer angeformt und/oder einstückig mit diesem ausgebildet oder aber, insbesondere lösbar, an diesem angeordnet.

Die lösbare Anordnung des jeweiligen Führungsmittels beziehungsweise -elements am Aufnehmer kann dabei insbesondere durch Verschraubung oder Verrastung oder Klemmung bewirkt sein, wobei entsprechend komplementäre Befestigungsmittel am jeweiligen Führungsmittel und/oder Aufnehmer vorgesehen sind, wie Gewindestift und Gewindebuchse, Rasthaken beziehungsweise -Nasen und -Öse oder entsprechende Klemmmittel, wie beispielsweise Buchsen, Nuten, insbesondere auch in Schwalbenschwanzform, und diesbezügliche Federelemente.

In vorteilhafter Ausgestaltung ist das jeweilige Führungsmittel bei stiftartiger Ausgestaltung im oberen, nämlich dem Aufnehmer abgewandten und dem jeweilig komplementären Führungsmittel zugewandten Endbereich, spitz zulaufend, konisch zugespitzt oder abgerundet ausgebildet.

In einer weiteren Ausgestaltung ist das jeweilige stiftartige Führungsmittel insgesamt konisch, das heißt vom Boden zur Spitze hin sich verjüngend ausgestaltet und/oder sich in Längsrichtung verjüngend ausgebildet.

Auch ist vorsehbar, dass das jeweilige Führungsmittel mehrere Teilbereiche umfasst, welche einen konischen Verlauf, das heißt mit einer sich über eine Länge ändernder Querschnittsfläche, insbesondere sich änderndem Durchmesser und/oder Umfang und/oder lichte Weite, oder einen gleichmäßigen beziehungsweise konstanten Verlauf, das heißt, mit einer sich über eine vorbestimmte Teilbereichslänge gleichbleibender Querschnittsfläche, insbesondere gleichbleibendem Durchmesser und/oder Umfang und/oder lichte Weite, aufweisen.

Auch ist vorteilhaft ein Reinigungsmodul vorsehbar, welches Mittel aufweist welche vermögen das jeweilige Werkzeug und/oder Werkobjekt von Verschmutzungen zu befreien, beispielsweise mittels Ultraschallbad und/oder Schleif- und/oder Reinigungsbürsten und/oder Schleif- und/oder Polierscheiben. Des Weiteren sind auch Sprühdüsen, welche Luft, Reinigungsflüssigkeiten oder Kühl-Schmiermittel verwenden einsetzbar, um das jeweilige Werkzeug und/oder Werkobjekt von Verschmutzungen zu befreien.

Der Reinigungsprozess des Werkzeuges und/oder des Werkobjektes ist aus Qualitätsgründen und/oder Prävention gegen Verschmutzung weiterer Module und/oder Prävention gegen Verschmutzung weiterer Stationen und/oder zur Vorbereitung für den Überprüfungsprozess des jeweiligen Werkzeuges und/oder des Werkobjektes vorsehbar und/oder durchführbar.

Der Reinigungsprozess ist dabei programmgesteuert zyklisch und/oder automatisiert durchführbar oder kann manuell über die MMI (Mensch-Maschinen-Schnittstelle) ausgelöst oder initiiert werden.

In einer vorteilhaften Ausgestaltung ist auch ein Überwachungsmodul, insbesondere ein Werkzeugbruch-Überwachungsmodul, vorsehbar, welches Mittel aufweist, mit welchen der Zustand des beziehungsweise der eingesetzten Werkzeuge und/oder Werkobjekte überwachbar und /oder ein Werkzeugbruch detektierbar ist.

Auch kann vorgesehen sein einen detektierten Werkzeugbruch vermittels der MMI dem jeweiligen Anwender zu melden und/oder anzugeben.

Vorteilhaft ist durch Einsatz des Überwachungsmoduls eine erhöhte Prozess- und/oder Systemsicherheit erreich- und/oder bewirkbar. Des Weiteren sind dadurch ungewollte Produktionsausfälle nahezu vermeidbar und die Anzahl an Ausschussteilen reduzierbar.

Die Überprüfung kann programmtechnisch automatisiert und/oder zyklisch durch geführt werden oder aber vermittels MMI durch den Anwender manuell ausgelöst beziehungsweise initiiert werden.

Für die Bewältigung der Überwachungsaufgaben ist dabei wenigstens eine Sensoranordnung beziehungsweise Sensorik vorsehbar.

Alternativ dazu und/oder ergänzend ist eine Überwachung des Werkzeugzustandes und/oder des Werkobjektzustandes auch mittels Force-Control, beziehungsweise kaftgesteuert und/oder -geregelt, über die auftretenden und/oder wirkenden Prozesskräfte während der Bearbeitung durchführbar beziehungsweise bewirkbar.

Die weitere Darlegung der Erfindung sowie vorteilhafter Ausgestaltungen und Weiterbildungen erfolgt nachstehend anhand einiger Figuren und Ausführungsbeispiele. Es zeigen
Fig. 1 eine beispielhaft ausgebildete Arbeits- und Servicestation,
Fig. 2 ein HMI mit Anzeige der Funktionalität der einzelnen Module und Informationen der gesamten Arbeits- und Servicestation,
Fig. 3 ein HMI mit Anzeige der Statusinformationen des Kalibriermoduls (-werkzeugs),
Fig. 4 ein HMI mit Anzeige der Statusinformationen des Reinigungsmoduls,
Fig. 5 ein HMI mit Anzeige der Statusinformationen des Überwachungsmoduls für Werkzeugbruch,
Fig. 6 eine beispielhaft ausgestaltete Arbeits- und Servicestation,
Fig. 7 eine auf einem Ständer angeordnete Station gemäß Fig. 6.

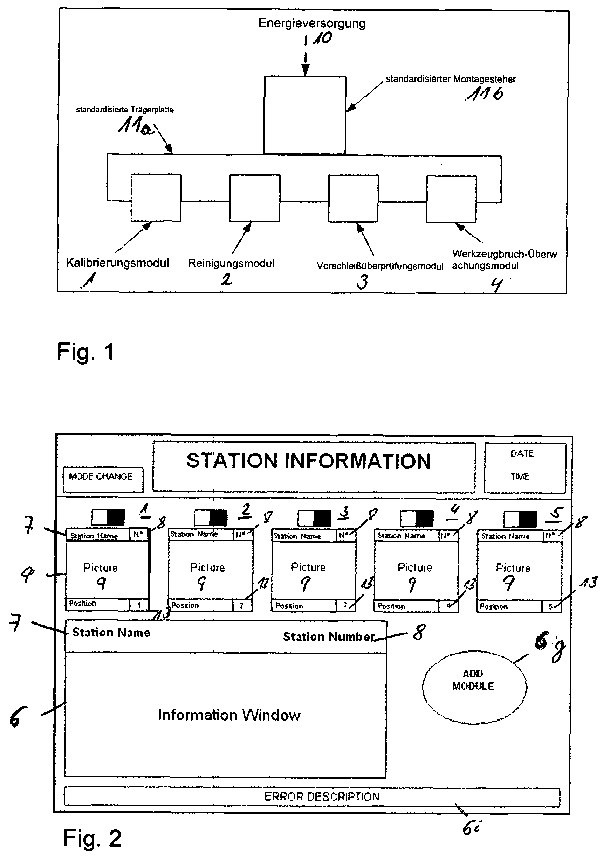

In Fig. 1 ist schematisch eine beispielhaft ausgebildete Arbeits- und Servicestation mit zentraler Schnittstelle zur Energieversorgung 10 der verschiedenen Module sowie des HMI beziehungsweise Komponenten des HMI, wie beispielsweise ein Bedienelement, eine Datenverarbeitungseinrichtung, insbesondere ein Mikrokontroller oder ein Mikrocomputer, Schnittstellen, insbesondere eine Übertragungseinrichtung, eine Anzeigeeinrichtung und/oder eine Eingabeeinrichtung gezeigt. Als Module sind ein Reinigungsmodul 2, ein Kalibrier- beziehungsweise Kalibrierungswerkzeug oder -modul 1, ein Überwachungsmodul für Werkzeugbruch 4 sowie ein Verschleißüberprüfungsmodul 3 angegeben, welche hier beispielhaft in Reihe an einem Modulträger, insbesondere einer Trägerplatte 11a und einem Montagesteher beziehungsweise Ständer 11 b zugreifbar angeordnet sind.

In den Figuren 2 bis 5 sind beispielhafte Anzeigen der Informationen des MMI beziehungsweise HMI betreffend die Station sowie die einzelnen Module, wie insbesondere für ein Kalibrierungsmodul 1, ein Reinigungsmodul 2, ein Verschleißüberprüfungsmodul 3 sowie ein Werkzeugbruchüberwachungsmodul 4 gezeigt.

In Fig. 1 sind die jeweiligen Komponenten oder Elemente der Arbeits- und Servicestation stilisiert beziehungsweise vereinfacht wiedergegeben.

In Fig. 2 ist die Bedienoberfläche beziehungsweise die Oberfläche der jeweiligen Bedienkonsole des HMI mit Anzeige der Funktionalität der einzelnen Module 1,2,3,4 und weiterer 5 sowie Informationen der gesamten Arbeits- und Servicestation 6 "Information Window" gezeigt.

Darüber hinaus sind weitere Statusinformationen der einzelnen Module, insbesondere ob aktiviert oder deaktiviert beziehungsweise aktiv oder deaktiv , vorgesehen, ein Bezeichner 7 der Station "Station Name", ein Identifikationskennzeichen 8 der jeweiligen Station "Station Number" oder "No", je eine Darstellung beziehungsweise ein Abbild "Picture" 9 des jeweiligen Moduls oder Werkzeugs der Service Station, insbesondere in stilisierter beziehungsweise vereinfachter Form, sowie eine Positionsangabe 13 wo sich welches Modul an der Station befindet "Position", wobei im einfachsten Fall lediglich durchnummeriert wird.

Die jeweiligen Informationen werden separiert in eigenen oder kombiniert in einem oder mehreren Fenstern beziehungsweise Anzeigeelementen dargestellt und wiedergegeben.

Auch ist wenigstens eine Schaltfläche 6g "ADD MODULE" vorsehbar, welche bedarfsabhängig das Hinzufügen oder Löschen von Modulen ermöglicht und/oder bewirkt.

Auch eine Anzeige für Fehlermeldungen 6i ist vorteilhaft vorsehbar.

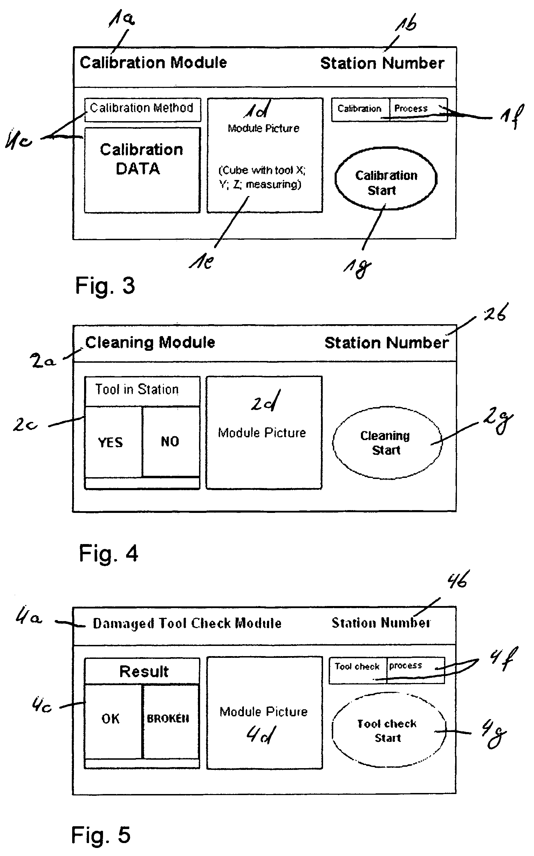

Vorteilhaft sind auch die übrigen Anzeigeelemente zumindest anteilig als Schaltflächen ausbildbar, welche bei Aktivierung weitere Informationen bereitstellen und insbesondere weitere, detailliertere beziehungsweise spezifischere Anzeigen/Schaltflächen nach Figuren 3 bis 5, hier beispielhaft für ein Kalibrierungsmodul 1, Reinigungsmodul 2 und Überwachungsmodul 4, aufschalten und/oder bereitstellen.
Derartige Anzeigen sind grundsätzlich für jedes vorgesehene Modul vorseh- und bereitstellbar.

Fig. 3 zeigt ein beispielhaft ausgeführtes HMI beziehungsweise eine HMI-Anzeige der Statusinformationen des Kalibriermoduls 1 beziehungsweise des Kalibrierungswerkzeugs, wobei ein Bezeichner 1a des jeweiligen Moduls "Clibration Module", ein Identifikationskennzeichen 1 b der jeweiligen Station "Station Number", Informationen 1c betr. das jeweilige Kalibrierungsverfahren "Calibration Method" , eine Darstellung 1 d beziehungsweise ein Abbild des jeweiligen Kalibrierungswerkzeugs, insbesondere in stilisierter beziehungsweise vereinfachter Form, mit Angabe des Bezugskoordinatensystems 1e mit Angabe der X-,Y-, und Z-Koordinatenachse, und/oder dessen Orientierung beziehungsweise Ausrichtung, sowie Status- und/oder Prozessanzeigen 1f und/oder wenigstens eine Schaltfläche 1g, insbesondere zum Abruf von Informationen und/oder Start "Calibration Start" und/oder Beenden beziehungsweise Abbruch des eigentlichen Kalibrierungs-Prozesses.

Fig. 4 zeigt ein beispielhaft ausgeführtes HMI beziehungsweise eine HMI-Anzeige der Statusinformationen des Reinigungsmoduls 2, wobei ein Bezeichner 2a des jeweiligen Moduls "Cleaning Module", ein Identifikationskennzeichen 2b der jeweiligen Station "Station Number", Informationen 1c betreffend ob sich ein Werkzeug oder Werkobjekt in dem Reinigungsmodul befindet 2c, eine Darstellung 2d beziehungsweise ein Abbild des jeweiligen Reinigungsmoduls, insbesondere in stilisierter beziehungsweise vereinfachter Form, und/oder wenigstens eine Schaltfläche 2g, insbesondere zum Abruf von Informationen und/oder Start "Cleaning Start" und/oder Beenden beziehungsweise Abbruch des eigentlichen ReinigungsProzesses.

Fig. 5 zeigt ein beispielhaft ausgeführtes HMI beziehungsweise eine HMI-Anzeige der Statusinformationen des Überwachungsmoduls für Werkzeugbruch 4, wobei ein Bezeichner 4a des jeweiligen Moduls "Damaged Tool Check Module", ein Identifikationskennzeichen 4b der jeweiligen Station "Station Number", Informationen 4c betreffend das jeweilige Überwachungs- beziehungsweise Überprüfungsverfahren, das heißt insbesondere dahingehend ob ein Werkzeug oder Werkobjekt gebrochen oder beschädigt ist "Result"", eine Darstellung 4d beziehungsweise ein Abbild des jeweiligen Überwachungsmoduls, insbesondere in stilisierter beziehungsweise vereinfachter Form, sowie Status- und/oder Prozessanzeigen 4f und/oder wenigstens eine Schaltfläche 4g, insbesondere zum Abruf von Informationen und/oder Start "Tool check Start" und/oder Beenden beziehungsweise Abbruch des eigentlichen Prüf-Prozesses

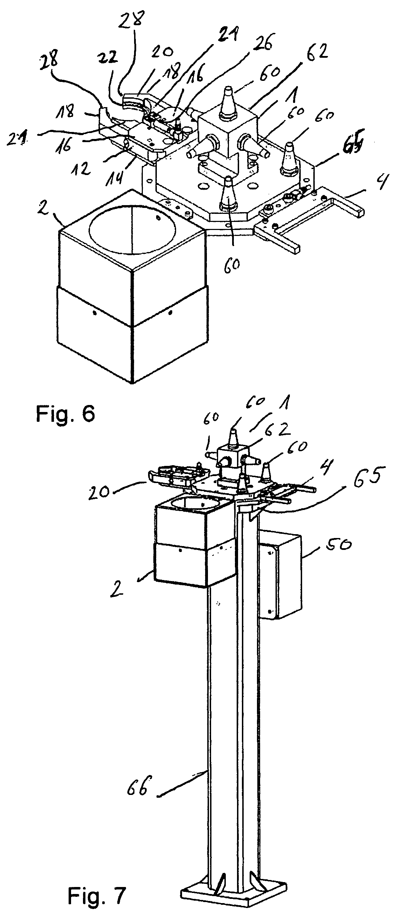

In Fig. 6 ist eine beispielhaft ausgebildete Arbeits- und Servicestation mit mehreren Arbeits- und Servicemodulen angegeben, wobei je ein als Werkzeugablage 20 ausgebildetes Servicemodul sowie ein als zumindest Teil eines Kalibrierwerkzeugs ausgebildetes Arbeitsmodul 1 sowie ein Reinigungsmodul 2 und eine als Bedienelement ausgebildete HMI (in Fig. 6 nicht gezeigt) in Schrägansicht von Oben angegeben und gezeigt.

Die Werkzeugablage 20 gemäß Fig. 6 - in Schrägansicht von oben dargestellt - besitzt einen Grundkörper 12, der aus zwei Teilen 14, 16 besteht, in welchem zwei spiegelsymmetrische Greifbacken 18 schwenkbeweglich angeordnet sind.

Der Grundkörper 20 hat eine rechteckige Grundstruktur mit abgeschrägten Ecken, welche beste Voraussetzungen für einen modularen Aufbau eines aus einer Mehrzahl von erfindungsgemäßen Werkzeugablageplätzen20 gebildeten Werkzeugspeichers bietet.

Der untere Teil 14 des Grundkörpers 12 bildet die Schwenkbasis für die beiden Greifbacken 18, die von dem oberen Teil 16 des Grundkörpers 12 abgedeckt sind.

Ferner ist in dem Grundkörper 12 eine nicht näher gezeigte Federeinrichtung angeordnet, welche beide Greifbacken 18 in Schließstellung beaufschlagt. Hierbei verlaufen die Schenkel der Greifbacken 18 parallel zu den Seitenkanten des Grundkörpers 12.

An den oberen Teil 16 des Grundkörpers 12 ist an dessen vorderer Zugangsseite ein Führungsteil 21 angeordnet, das mit einem halbkreisförmigen Tragkranz 22 versehen ist, der als Stützkragen und als Führung für ein Werkzeug dient, das in dem Werkzeugablageplatz 20 abgelegt ist.

Dieser halbkreisförmigen Tragkranz 22 findet seine Fortsetzung jeweils in entsprechenden Anformungen an den Innenseiten der beiden Greifbacken 18. An ihren freien Enden sind die Greifbacken 18 mit als Einführfase 28 bezeichneten Anschrägungen versehen, die für einen druckgesteuertes Öffnen der Greifbacken 18 und damit den Zugang zum Werkzeugablageplatz 20 und die sichere Aufnahme eines Werkzeuges sorgen, das zur Ablage in dem Werkzeugablageplatz 20 vorgesehen ist.

Schließlich ist am oberen Teil 16 des Grundkörpers 12 mittig ein Lade- oder Präsenzsensor 26 angeordnet, der bei Ablage eines Werkzeugs in den Werkzeugablageplatz 20 vom Werkzeug aktiviert wird und so den Ladezustand des Werkzeugablageplatzes 20 anzeigt.

Die beiden Greifbacken 18 begrenzen in Schließstellung jeweils etwa einen Achtelkreis, wobei zwischen den sich einander zugewandten freien Enden der Greifbacken 18 eine Lücke vorgesehen ist, welche der Ablage beziehungsweise der Aufnahme eines im Werkzeugablageplatz 20 befindlichen Werkzeuges dient.

Wenn ein anderer Werkzeughaltertyp zum Einsatz kommt, bereitet es mit der Erfindung keinerlei Schwierigkeiten, das Führungsteil 21 sowie die beiden Greifbacken 18 komplett gegen solche auszutauschen, die an den neuen Werkzeughaltertyp angepasst sind.

Weiterhin ist ein als Teil eines Kalibrierwerkzeugs 1 ausgebildetes Arbeitsmodul für eine Handhabungsvorrichtung, insbesondere zur Erfassung und Bestimmung des TCP gezeigt. Das Kalibrierwerkzeug 1 umfasst wenigstens zwei Führungselemente, wobei wenigstens ein erstes Führungselement zur Anordnung am distalen Ende der jeweiligen Handhabungsvorrichtung vorgesehen ist (in der Figur nicht gezeigt), und wenigstens ein zweites Führungselement 60 zur Kennzeichnung eines Koordinatenpunktes und/oder einer Orientierung, insbesondere des TCP oder eines Werkobjektes, vorgesehen ist und wobei das wenigstens eine erste sowie das wenigstens eine zweite Führungselement derart aufeinander angepasst und/oder zueinander kompatibel und/oder komplementär sind, dass das eine Element in das dazu kompatible andere Element einführbar ist und/oder ein Eingriff des einen Elemente in das jeweils andere Element bewirkbar ist und/oder jeweils zwei komplementäre Elemente passgenau ineinander anordenbar sind.

In einer vorteilhaften Weiterbildung des Werkzeuges 1 weist wenigstens eines der Führungselemente 60 einen sich zumindest über einen Teilbereich des Elements erstreckenden Konus auf, so dass eine leichtere Ineinanderführung des ersten und zweiten Führungselementes und eine verbesserte Passgenauigkeit beziehungsweise ein passgenauerer Sitz ermöglicht wird.

In Fig. 6 ist das wenigstens eine zweite Führungselement 60 im Wesentlichen zylindrisch, insbesondere als Stift oder Stab oder Dorn oder Zapfen, ausgebildet, wobei grundsätzlich unterschiedliche geometrische Querschnittsflächen, wie beispielsweise elliptisch, kreisförmig, dreieckig oder aber ach vier und mehreckig möglich sind.

In einer weiteren Ausgestaltung umfasst das Kalibrierwerkzeug 1 wenigstens einen Aufnehmer 62 zur Aufnahme oder Anordnung wenigstens eines zweiten Führungselementes, im hier gezeigten Beispiel wenigstens vier zweite Führungselemente.

Weiterbildend ist das jeweilige zweite Führungselement 60 bei stiftartiger Ausbildung an den Aufnehmer 62 angeformt und/oder einstückig mit diesem ausgebildet oder aber, insbesondere lösbar, an diesem angeordnet. Entsprechend kann das jeweilige zweite Führungselement 60 auch an ein jeweiliges Werkobjekt angeformt oder an diesem angeordnet sein.

Die lösbare Anordnung des Führungsmittels am Aufnehmer 62 und/oder dem Werkobjekt kann dabei insbesondere durch Verschraubung oder Verrastung oder Klemmung bewirkt sein, wobei entsprechend komplementäre Befestigungsmittel am jeweiligen Führungsmittel und Werkobjekt und/oder Aufnehmer 62 vorgesehen sind, wie Gewindestift und Gewindebuchse, Rasthaken beziehungsweise -nasen und - öse oder entsprechende Klemmmittel, wie beispielsweise Buchsen, Nuten, insbesondere auch in Schwalbenschwanzform, und diesbezügliche Federelemente.

Im oberen Endbereich ist das jeweilige zweite Führungsmittel spitz zulaufend, konisch zugespitzt oder abgerundet ausgebildet.

Das jeweilige stiftartige Führungsmittel 60 ist insgesamt konisch, das heißt vom Boden zur Spitze hin sich verjüngend ausgestaltet und/oder sich in Längsrichtung verjüngend ausgebildet ist.

Auch ist vorsehbar, dass das jeweilige Führungsmittel mehrere Teilbereiche umfasst, welche einen konischen Verlauf, das heißt mit einer sich über eine Länge ändernder Querschnittsfläche, insbesondere sich änderndem Durchmesser und/oder Umfang und/oder lichte Weite, oder einen gleichmäßigen beziehungsweise konstanten Verlauf, das heißt, mit einer sich über eine vorbestimmte Teilbereichslänge gleichbleibender Querschnittsfläche, insbesondere gleichbleibendem Durchmesser und/oder Umfang und/oder lichte Weite.

Darüber hinaus sind weitere stift- und/oder dornartige zweite Führungselemente unmittelbar auf dem Modulträger 65 angeordnet.

Auch ein Reinigungsmodul 2 zur Reinigung der eingesetzten Bearbeitungswerkzeuge beispielsweise mittels Luftdruck ist vorteilhaft vorgesehen.

Zudem ist ein Überwachungsmodul 4 zur Detektion von Werkzeugbruch und/oder Beschädigung vorgesehen.

Der in Fig. 7 gezeigte Gegenstand unterscheidet sich von Fig. 6 im Wesentlichen dadurch, dass der Modulträger 65 auf einem säulenartigen Ständer 66 mit im Wesentlichen quadratischen Querschnitt und gegenüber seinem Querschnitt vergrößerter Standfläche angeordnet ist, so dass für die übrigen Elemente und Komponenten auf die Beschreibung zu Fig. 6 verwiesen wird. Zusätzlich ist noch ein Bedienelement/Bedienkonsole des jeweiligen HMI 50 und/oder eine als Teil des HMI beziehungsweise des Bedienelementes ausgebildete Schnittstelle zur Fernübertragung der jeweiligen Bedien- und Statusinformationen vorgesehen. Weiterbildend ist am Steher auch lediglich eine HMI-Schnittstelle zur Fernübertragung von Informationen und/oder Steuerungsanweisungen in Verbindung mit einer portablen Bedienkonsole/Bedienelement vorsehbar.

## Patentansprüche

1. Arbeits- und Servicestation für eine Handhabungsvorrichtung, nämlich einen mehrachsigen Industrieroboter, mit wenigstens einer Mensch-Maschinen-Schnittstelle sowie wenigstens einem Arbeits- und/oder Servicemodul (1,2,3,4), wobei ein Modulträger (11 a, 65) mit wenigstens einer Schnittstelle zur Ankopplung und/oder Anordnung des wenigstens einen Arbeits- und/oder Servicemoduls (1,2,3,4) vorgesehen ist und wenigstens ein Arbeits- und/oder Servicemodul (1,2,3,4), insbesondere über eine Kommunikationsverbindung, mit wenigstens einer Mensch-Maschinen-Schnittstelle (50) zusammenwirkt.

2. Arbeits- und Servicestation nach Anspruch 1, **dadurch gekennzeichnet, dass** die Mensch-Maschine-Schnittstelle (50) als graphische Schnittstelle mit einer Eingabe- und/oder Anzeigevorrichtung, insbesondere Touchscreen, ausgebildet ist.

3. Arbeits- und Servicestation nach einem der vorherigen Ansprüche, **dadurch gekennzeichnet, dass** über welche der jeweilige Anwender über den Status der einzelnen Module informierbar und das manuelle Auslösen der Funktionen der Module initiierbar ist.

4. Arbeits- und Servicestation nach einem der vorherigen Ansprüche, **dadurch gekennzeichnet, dass** wenigstens ein Arbeits- oder Servicemodul (20) zur Aufnahme und/oder zum Wechseln wenigstens eines Werkzeuges, insbesondere eines Werkzeuges mit Antriebsspindel, vorbereitet und/oder eingerichtet ist.

5. Arbeits- und Servicestation nach einem der vorherigen Ansprüche, **dadurch gekennzeichnet, dass** die Mensch-Maschine-Schnittstelle (50) als graphische Schnittstelle mit einer Eingabe- und Anzeigevorrichtung, gegebenenfalls auch kombiniert, beispielsweise als Touchscreen, ausgebildet ist, über welche der jeweilige Anwender über den Status der einzelnen Module informierbar und das manuelle Auslösen der Funktionen der Module initiierbar ist.

6. Arbeits- und Servicestation nach einem der vorherigen Ansprüche, **dadurch gekennzeichnet, dass** das MMI (50) Mittel aufweist, welche den jeweiligen Anwender über den Status der einzelnen Module informieren und/oder es dem Anwender ermöglichen aktiv, das heißt auf Anweisung, die Funktion beziehungsweise den Prozess des jeweiligen Moduls abrufen beziehungsweise auslösen und/oder initiieren.

7. Arbeits- und Servicestation nach Anspruch 6, **dadurch gekennzeichnet, dass** bei den über das MMI abrufbaren Statusinformationen kann es sich dabei um allgemeine Informationen, beispielsweise auch über Sensoren erfasster Umgebungsparameter und Randbedingungen, und/oder um spezifische Informationen handeln, welche sich beispielsweise auf das jeweilige Werkzeug beziehen.

8. Arbeits- und Servicestation nach einem der vorherigen Ansprüche, **dadurch gekennzeichnet, dass** wenigstens eine Schnittstelle vorgesehen ist, mit welcher die Informationen vom MMI abrufbar und/oder an die jeweilige Steuer-/Regeleinrichtung der Handhabungsvorrichtung übermittelbar und/oder übertragbar sind.

9. Arbeits- und Servicestation nach einem der vorherigen Ansprüche, **dadurch gekennzeichnet, dass** ein Kalibriermodul (1) beziehungsweise ein Kalibrierungsmodul vorgesehen ist.

10. Arbeits- und Servicestation nach einem der vorherigen Ansprüche, **dadurch gekennzeichnet, dass** ein Reinigungsmodul (2) vorgesehen ist, welches Mittel aufweist welche vermögen das jeweilige Werkzeug und/oder Werkobjekt von Verschmutzungen zu befreien, insbesondere mittels Ultraschallbad und/oder Schleif- und/oder Reinigungsbürsten und/oder Schleif- und/oder Polierscheiben, Sprühdüsen, welche Luft, Reinigungsflüssigkeiten oder Kühl-Schmiermittel verwenden.

11. Arbeits- und Servicestation nach einem der vorherigen Ansprüche, **dadurch gekennzeichnet, dass** ein Überwachungsmodul (4), insbesondere zur Detektion von Werkzeugbruch vorgesehen ist.

12. System zur Bedienung einer Handhabungsvorrichtung, welche zumindest eine Steuer-/Regeleinrichtung sowie wenigstens eine Arbeits- und Servicestation nach einem der Ansprüche 1 bis 11 umfasst, insbesondere mit einer Mensch-Maschinen-Schnittstelle (50) in Form eines Bedienpanels und/oder Bedienelementes, wobei die Steuer-Regeleinrichtung mit der Arbeits- und Servicestation, und insbesondere dem HMI zusammenwirkt.

## Claims

1. Work and service station for a multiaxial industrial robot, having at least one work and/or service module (1, 2, 3, 4), **characterized in that** the work and service station has at least one human-machine interface (50), wherein a module carrier (11a, 65) having at least one interface for docking and/or arranging the at least one work and/or service module (1, 2, 3, 4) is provided and at least one work and/or service module (1, 2, 3, 4) interacts with at least one human-machine interface (50), in particular via a communications link.

2. Work and service station according to Claim 1, **characterized in that** the human-machine interface (50) is configured as a graphical interface having an input and/or display device, in particular a touchscreen.

3. Work and service station according to either of the preceding claims, **characterized in that** the human-machine interface (50) has means via which the particular user is able to be informed about the status of the individual modules and the manual triggering of the functions of the modules is able to be initiated.

4. Work and service station according to one of the preceding claims, **characterized in that** at least one work or service module (20) is prepared and/or set up to receive and/or to change at least one tool, in particular a tool with a drive spindle.

5. Work and service station according to one of the preceding claims, **characterized in that** the human-machine interface (50) is configured as a graphical interface having an input and display device, optionally in combination, for example as a touchscreen, by way of which the particular user is able to be informed about the status of the individual modules and the manual triggering of the functions of the modules is able to be initiated.

6. Work and service station according to one of the preceding claims, **characterized in that** the human-machine interface (50) has means which inform the particular user about the status of the individual modules and/or allow the user to retrieve, or trigger and/or initiate, the function or the process of the respective module actively, that is to say as instructed.

7. Work and service station according to Claim 6, **characterized in that** the status information that is able to be retrieved via the human-machine interface (50) can be general information, for example including environmental parameters and boundary conditions that are sensed via sensors, and/or specific information which relates for example to the particular tool.

8. Work and service station according to one of the preceding Claims, **characterized in that** provision is made of at least one interface by way of which the information is retrievable from the human-machine interface (50) and/or is transmissible and/or transferable to the respective control/regulating device of the multiaxial industrial robot.

9. Work and service station according to one of the preceding claims, **characterized in that** a calibrating module (1) or calibration module is provided.

10. Work and service station according to one of the preceding claims, **characterized in that** provision is made of a cleaning module (2) which has means that are able to free the particular tool and/or work object of soiling, in particular by means of ultrasonic bath and/or abrasive and/or cleaning brushes and/or abrasive and/or polishing wheels, spray nozzles which use air, cleaning fluids or cooling lubricants.

11. Work and service station according to one of the preceding claims, **characterized in that** a monitoring module (4), in particular for detecting tool breakage, is provided.

12. System for controlling a multiaxial industrial robot, which comprises at least one control/regulating device and at least one work and service station according to one of Claims 1 to 11, in particular having a human-machine interface (50) in the form of a control panel and/or control element, wherein the control/regulating device interacts with the work and service station, and in particular the human-machine interface (50).

## Revendications

1. Station de travail et de service pour robot industriel multiaxe, comprenant au moins un module de travail et/ou de service (1, 2, 3, 4), **caractérisée en ce que** la station de travail et de service possède au moins une interface homme-machine (50), un porte-module (11a, 65) comprenant au moins une interface destinée à l'accouplement et/ou au montage de l'au moins un module de travail et/ou de service (1, 2, 3, 4) étant prévu et au moins un module de travail et/ou de service (1, 2, 3, 4) coopérant avec au moins une interface homme-machine (50), notamment par le biais d'une liaison de communication.

2. Station de travail et de service selon la revendication 1, **caractérisée en ce que** l'interface homme-machine (50) est réalisée sous la forme d'une interface graphique comprenant un dispositif de saisie et/ou d'affichage, notamment un écran tactile.

3. Station de travail et de service selon l'une des revendications précédentes, **caractérisée en ce que** l'interface homme-machine (50) possède des moyens par le biais desquels l'utilisateur respectif peut être informé à propos de l'état des modules individuels et par le biais desquels peut être initié le déclenchement manuel des fonctions des modules.

4. Station de travail et de service selon l'une des revendications précédentes, **caractérisée en ce qu'**au moins un module de travail et/ou de service (20) est préparé et/ou conçu pour accueillir et/ou pour changer au moins un outil, notamment un outil muni d'une broche d'entraînement.

5. Station de travail et de service selon l'une des revendications précédentes, **caractérisée en ce que** l'interface homme-machine (50) est réalisée sous la forme d'une interface graphique comprenant un dispositif de saisie et d'affichage, le cas échéant également combiné, par exemple sous la forme d'un écran tactile, par le biais duquel l'utilisateur respectif peut être informé à propos de l'état des modules individuels et par le biais duquel peut être initié le déclenchement manuel des fonctions des modules.

6. Station de travail et de service selon l'une des revendications précédentes, **caractérisée en ce que** l'interface homme-machine (50) possède des moyens par le biais desquels l'utilisateur respectif peut être informé à propos de l'état des modules individuels et/ou qui permettent à l'utilisateur d'invoquer ou encore de déclencher et/ou d'initier activement, c'est-à-dire sur instruction, la fonction ou le processus du module correspondant.

7. Station de travail et de service selon la revendication 6, **caractérisée en ce que** les informations d'état qui peuvent être invoquées par le biais de l'interface homme-machine (50) peuvent être des informations d'ordre général, par exemple également des paramètres d'environnement et des conditions aux limites acquis par le biais de capteurs, et/ou des informations spécifiques qui se rapportent, par exemple, à l'outil correspondant.

8. Station de travail et de service selon l'une des revendications précédentes, **caractérisée en ce qu'**il existe au moins une interface avec laquelle les informations peuvent être invoquées par l'interface homme-machine (50) et/ou peuvent être communiquées et/ou transmises au dispositif de commande/régulation correspondant du robot industriel multiaxe.

9. Station de travail et de service selon l'une des revendications précédentes, **caractérisée en ce qu'**il existe un module calibré (1) ou un module de calibrage.

10. Station de travail et de service selon l'une des revendications précédentes, **caractérisée en ce qu'**il existe un module de nettoyage (2) qui possède des moyens qui sont en mesure d'éliminer les salissures présentes sur l'outil et/ou l'objet usiné respectif, notamment au moyen d'un bain à ultrasons et/ou de brosses de polissage et/ou de nettoyage et/ou de disques de meulage et/ou de polissage, de buses de pulvérisation qui utilisent de l'air, des liquides de nettoyage ou des lubrifiants/réfrigérants.

11. Station de travail et de service selon l'une des revendications précédentes, **caractérisée en ce qu'**il existe un module de surveillance (4), notamment destiné à détecter la rupture d'outil.

12. Système de commande d'un robot industriel multiaxe qui comprend au moins un dispositif de commande/régulation ainsi qu'une station de travail et de service selon l'une des revendications 1 à 11, notamment pourvue d'une interface homme-machine (50) sous la forme d'un panneau de commande et/ou d'un élément de commande, le dispositif de commande/régulation coopérant avec la station de travail et de service, et notamment avec l'interface homme-machine (50).
